# EUROPEAN PATENT SPECIFICATION

(11) **EP 0 825 627 B1**
(45) Date of publication and mention of the grant of the patent: **24.07.2002**
(21) Application number: 97306343.1
(22) Date of filing: 20.08.1997
(51) Int. Cl.: H01H 3/20

(54) **Actuating mechanism**
Betätigungsmechanismus
Mécanisme de commande

(30) Priority: 23.08.1996 GB 9617687
(43) Date of publication of application: 25.02.1998
(73) Proprietor: ELECTROLUX OUTDOOR PRODUCTS LIMITED, Newton Aycliffe, Co Durham DL5 6UP (GB)
(72) Inventor: Zwolinski, Paul, Romanby Park, Northallerton, DL7 8FE (GB)
(74) Representative: Pratt, David Martin

(56) References cited:
- DE-A- 4 119 937
- GB-A- 2 220 104
- US-A- 3 594 529
- US-A- 5 203 147

## Description

This invention relates to an actuating mechanism, and in particular to a switch actuating mechanism for an electrically-powered lawnmower and other electrically-powered garden care equipment

The switch actuating mechanism of an electric lawnmower is usually attached to the handle of the mower, and has an operating lever which, in use, is squeezed by the operator to start the electric motor of the lawnmower. Before this lever can actuate the switch, however, a safety interlock button has to be depressed, so as to eliminate the chance of accidental starting Once the machine has been started, pressure on this safety interlock button may be released. The design of the interlock mechanism found on machines in the marketplace falls into one of two categories, namely
(i) Those whereby the safety interlock button prevents the lever from moving from its rest position, and so will not actuate the switch, until the interlock button is depressed removing the obstruction.
(ii) Those whereby the lever is allowed to move freely from its rest position, but does not reach the switch, so that squeezing the lever will not result in switch actuation. Pressing the safety interlock button interposes an additional member between the lever and the switch, thus transmitting motion through to the switch allowing its actuation. (DE 41 19 937 A)

Both techniques have disadvantages Thus, with a category (i) mechanism, the lever is prone to damage, as it is rigidly fixed. Moreover, the operator tends to feel that it may be possible to override the interlock by squeezing the lever sufficiently hard. A category (ii) mechanism is complex and costly, and requires that several moving parts selectively contact or miss one another With the inherent flexibility of plastics materials, and the tolerances achievable with injection moulding, it can be difficult to achieve a successful and reliable design. With both categories of mechanism, the sequence of pressing the safety interlock followed by squeezing the lever must be followed, otherwise the switch will not be actuated. Additionally, both methods have minimal over-travel of the lever, so that, in use, only a slight relaxation of grip by the operator causes the switch to turn off, and the motor to stop.

The aim of the invention is to provide an improved actuating mechanism for this type of electrically-powered machine

The present invention provides an actuating mechanism comprising a first movable member having first and second operating positions, an actuator for moving the first movable member from its first operating position to its second operating position, a second movable member having a first operating position in which the first movable member cannot move from its first operating position to its second operating position, and a second operating position in which the first movable member can move from its first operating position to its second operating position, and lost motion means for taking up movement of the actuator when the second movable member is in its first operating position, thereby preventing the actuator from moving the first movable member from its first operating position to its second operating position.

Advantageously, the second movable member is arranged to move in a direction transverse to that in which the first movable member moves.

A spring may constitute the lost motion means, and the spring may be a leaf spring made of spring steel or a moulded resilient polymer such as an acetal polymer. Alternatively, the spring may be of a coil spring made of spring wire.

In a preferred embodiment, the first movable member is provided with a return spring which biases said member towards its first operating position Preferably, the spring has a greater spring force than the return spring of the first movable member

The second movable member may also be provided with a return spring which biases said member towards its first operating position

The invention also provides an electric switch mechanism comprising a pair of contacts and an actuating mechanism as defined above, wherein the first movable member is associated with a manually-operable lever, and the second movable member comprises a safety interlock, and wherein the contacts are open when the first movable member is in its first operating position, and closed when said member is in its second operating position

The invention further provides an electric lawnmower comprising a handle for manoeuvring the lawnmower, and an electric switch mechanism as defined above, the electric switch mechanism being fitted to the handle, and the arrangement being such that the lever is movable to a position alongside the handle for switch actuation

A switch for an electric lawnmower, the switch incorporating an actuating mechanism constructed in accordance with the invention, will now be described in detail, by way of example. with reference to the drawings, in which.-
Figure 1 is a schematic view of the switch in a first operating position, the switch being attached to the handle of an electric lawnmower,
Figure 2 is a schematic view of the switch in a second operating position;
Figure 3 is a schematic view of the switch in a third operating position, and
Figure 4 is a schematic view of a modified form of the switch of Figure 1.

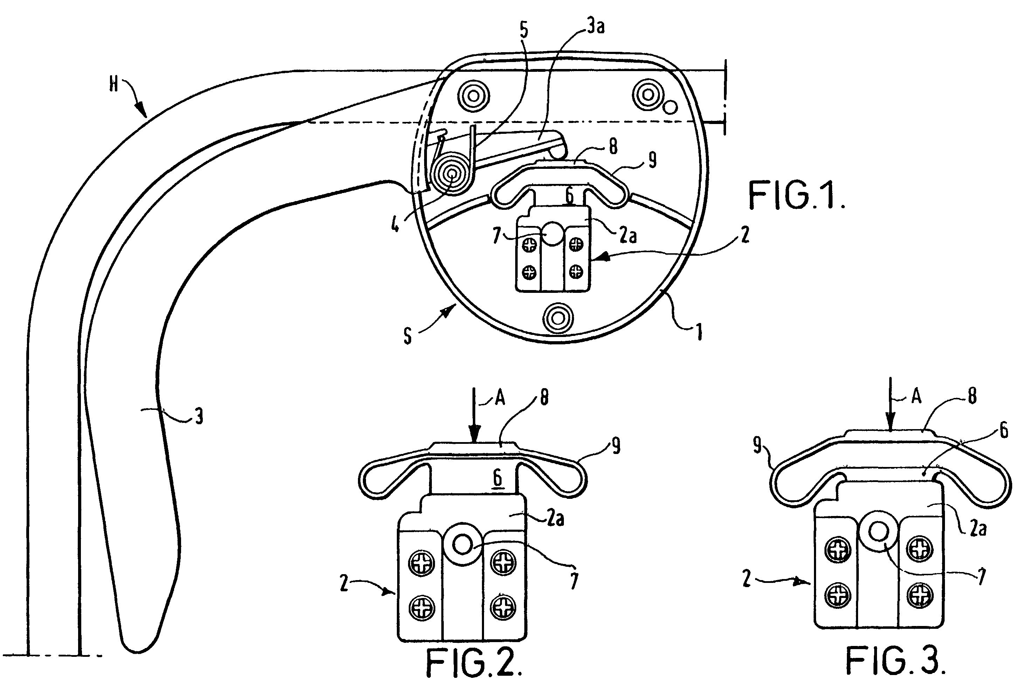

Referring to the drawings, Figure 1 shows a switch box S attached to the handle H of an electric lawnmower (not shown) The switch box S has a two-part housing, namely a lower housing part 1 and a lid (not shown) The housing part 1 houses a switch unit 2 which is actuable by means of a lever 3 to switch an electric motor (not shown) of the lawnmower on and off. The lever 3 is pivotally mounted, at 4, on the housing part 1, a spring 5 being provided for biassing the lever away from the handle H.

The switch unit 2 is a modified form of a commercially-available switch (Kautt & Bux Schlater GmbH Type SR switch) This switch unit 2 has a pair of switch contacts (not shown) which can be opened or closed by movement of an actuating slide 6 slidably mounted within a casing 2a of the switch unit. The slide 6 is movable between a first position (in which the switch contacts are open) and a second position (in which the switch contacts are closed) A switch return spring (not shown) is provided for biassing the slide 6 towards its first position The switch unit 2 is provided with a safety interlock button 7 which is movable between a first position (in which it prevents the slide 6 from sliding within the casing 2a to close the switch contacts), and a second position (in which such a sliding movement is permitted) The button 7 is spring biassed towards its first position by means of a spring (not shown). The slide 6 is connected to an actuator member 8 by means of a leaf spring 9 made of an acetal polymer or from spring wire. An actuation arm 3a provided at the free end of the lever 3 is engagable with the actuator member 8, in a manner described below, for actuation of the switch contacts.

The mechanism described above operates in the following manner. Figure 1 shows the arrangement in the rest-position, that is to say when no attempt is being made to turn the lawnmower on In this position, the lever 3 is not pressed against the handle H of the lawnmower (so that the lever arm 3a does not pressurise the actuator number 8), and the button 7 is in its first position

Figure 2 shows the arrangement when an operator tries to start the lawnmower without depressing the button 7. Thus, the lever 3 is pressed against the handle H (not shown in Figure 2), so that the lever arm 3a rotates about the pivot 4 to force the actuator member 8 in the direction of the arrow A As the button 7 is in its first position, however, the slide 6 cannot move, so the movement of the actuator member is taken up by compression of the spring 9 (as clearly shown in Figure 2). The spring 9 thus acts as a lost motion device, taking up the movement of the actuator member 8

Figure 3 shows the arrangement when an operator turns the lawnmower on, having depressed the button 7 Thus, once the button 7 has been depressed to move into its second operating position, the slide 6 is free to move within the casing 2a. Consequently, as the lever 3 is pressed against the handle H, the lever arm 3a pivots, pushing the actuator member 8 in the direction of the arrow A This results in partial compression of the spring 9, as the force of this spring is greater than the force of the switch return spring. Motion is then transmitted through to the slide 6 causing it to move from its first position to its second position, thereby closing the switch contacts and starting the lawnmower.

The flexibility of the spring 9 allows for considerable over-travel to be designed in, thus eliminating the effect of the motor switching off when the operator's grip is relaxed a little. Moreover, as the force to the switch is applied by the spring 9 only (rather than directly from the lever 3), it is impossible to overload the switch by applying excessive force to the lever

If the lever 3 is squeezed first, followed by depression of the button 3, the switch will still actuate, as the force is limited to that applied by the spring 9 Therefore, with this arrangement, the sequence of operation of the lever 3 and the button 7 is unimportant

As the spring 9 is in permanent contact with both the lever 3 and the slide 6, problems associated with moving parts and tolerances are eliminated. The arrangement is also very cost effective, due to the low number of parts involved.

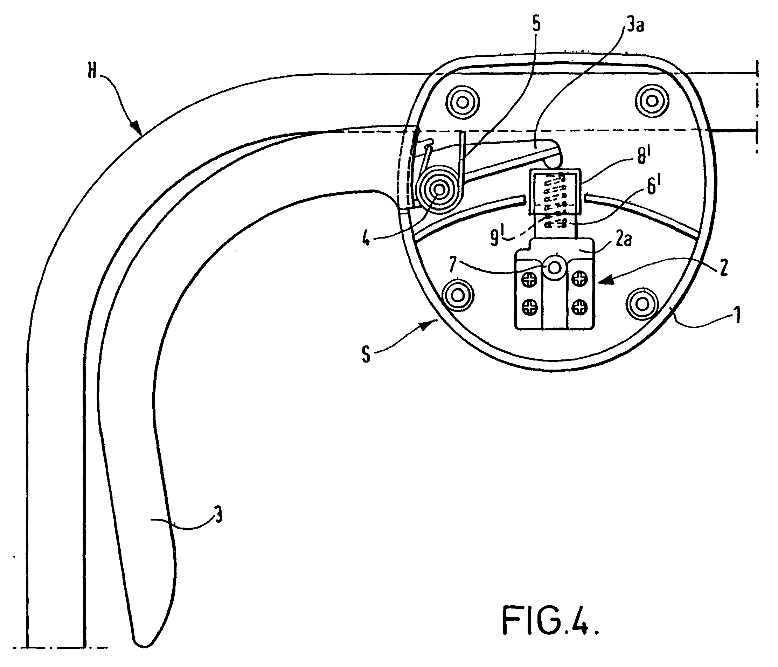

Figure 4 shows a modified form of the switch of Figures 1 to 3 As the modified switch is very similar to that already described, like reference numerals will be used for like parts. and only the modifications will be described in detail Thus, the leaf spring of the Figure 1 embodiment is replaced in the Figure 4 embodiment by a coil spring 9' made from spring wire, and the actuator member 8 is replaced by a cup-shaped actuator 8' One end of coil spring 9' fits within the cup-shaped actuator 8', the other end fitting within a cup-shaped hollow in the slide 6' The embodiment of Figure 4 operates in the same way as that of Figures 1 to 3

## Claims

1. An actuating mechanism comprising a first movable member (6) having first and second operating positions, an actuator (3a) for moving the first movable member (6) from its first operating position to its second operating position, **characterised in that** the actuating mechanism comprises a second movable member (7) having a first operating position in which the first movable member (6) cannot move from its first operating position to its second operating position, and a second operating position in which the first movable member (6) can move from its first operating position to its second operating position, and lost motion means (9) for taking up movement of the actuator (3a) when the second movable member (7) is in its first operating position, thereby preventing the actuator (3a) from moving the first movable member (6) from its first operating position to its second operating position

2. An actuating mechanism as claimed in claim I, wherein the second movable member (7) is arranged to move in a direction transverse to that in which the first movable member (6) moves.

3. An actuating mechanism as claimed in claim 1 or claim 2, wherein a spring (9,9') constitutes the lost motion means

4. An actuating mechanism as claimed in claim 3, wherein the spring is a leaf spring (9) made of spring steel or a moulded resilient polymer such as an acetal polymer

5. An actuating mechanism as claimed in claim 3, wherein the spring is a coil spring (9') made of spring wire

6. An actuating mechanism as claimed in any one of claims 1 to 5, wherein the first movable member (6) is provided with a return spring which biases said member towards its first operating position

7. An actuating mechanism as claimed in claim 6 when appendant to claim 4 or claim 5, wherein the spring has a greater spring force than the return spring.

8. An actuating mechanism as claimed in any one of claims 1 to 7, wherein the second movable member (7) is provided with a return spring which biasses said member towards its first operating position.

9. An electric switch mechanism comprising a pair of contacts and an actuating mechanism as claimed in any one of claims 1 to 8, wherein the first movable member (6) is associated with a manually-operable lever, and the second movable member (7) comprises a safety interlock, and wherein the contacts are open when the first movable member (6) is in its first operating position, and closed when said member is in its second operating position

10. An electric lawnmower comprising a handle (H) for manoeuvring the lawnmower, and an electric switch mechanism as claimed in claim 9, the electric switch mechanism being fitted to the handle, and the arrangement being such that the lever (3) is movable to a position alongside the handle for switch actuation

## Patentansprüche

1. Betätigungsmechanismus mit einen ersten beweglichen Teil (6), welcher eine erste und zweite Betriebsstellung aufweist, und einer Betätigungseinrichtung (3a) zum Bewegen des ersten beweglichen Teils (6) aus seiner ersten Betriebsstellung in seine zweite Betriebsstellung,
**dadurch gekennzeichnet,**
**dass** der Betätigungsmechanismus ein zweites bewegliches Teil (7) besitzt, welches eine erste Betriebsstellung, in welcher sich das erste bewegliche Teil (6) nicht aus seiner ersten Betriebsstellung in seine zweite Betriebsstellung bewegen kann, und eine zweite Betriebsstellung aufweist, in welcher sich das erste bewegliche Teil (6) aus seiner ersten Betriebsstellung in seine zweite Betriebsstellung bewegen kann, und eine Leerlaufeinrichtung (9) zum Aufnehmen der Bewegung der Betätigungseinrichtung (3a) aufweist, wenn das zweite bewegliche Teil (7) in seiner ersten Betriebsstellung ist und dadurch die Betätigungseinrichtung (3a) am Bewegen des ersten beweglichen Teils (6) aus seiner ersten Betriebsstellung in seine zweite Betriebsstellung hindert.

2. Betätigungsmechanismus nach Anspruch 1, wobei das zweite bewegliche Teil (7) in einer Querrichtung zu der Richtung, bewegbar ist, in welcher sich das erste bewegliche Teil (6) bewegt.

3. Betätigungsmechanismus nach Anspruch 1 oder 2, wobei eine Feder (9, 9')die Leerlaufeinrichtung bildet.

4. Betätigungsmechanismus nach Anspruch 3, wobei die Feder eine Blattfeder (9) ist, welche aus Federstahl oder einem gegossenen federnden Polymer, wie einem Acetalpolymer, hergestellt ist.

5. Betätigungsmechanismus nach Anspruch 3, wobei die Feder eine Schraubenfeder (9') ist, welche aus Federdraht hergestellt ist.

6. Betätigungsmechanismus nach einem der Ansprüche 1 bis 5, wobei das erste bewegliche Teil (6) mit einer Rückstellfeder versehen ist, welches das Teil gegen seine erste Betriebsstellung vorspannt.

7. Betätigungsmechanismus nach Anspruch 6, wenn zu Anspruch 4 oder 5 gehörig, wobei die Feder eine größere Federkraft als die Rückstellfeder aufweist.

8. Betätigungsmechanismus nach einem der Ansprüche 1 bis 7, wobei das zweite bewegliche Teil (7) mit einer Rückstellfeder versehen ist, welche das Teil gegen seine erste Betriebsstellung vorspannt.

9. Elektrischer Schaltmechanismus mit einem Kontaktpaar und einem Betätigungsmechanismus nach einem der Ansprüche 1 bis 8, wobei das erste bewegliche Teil (6) mit einem von Hand bedienbaren Hebel verbunden ist, und das zweite bewegliche Teil (7) eine Sicherheitssperre aufweist, und wobei die Kontakte offen sind, wenn das erste bewegliche Teil (6) in seiner ersten Betriebsstellung ist, und geschlossen ist, wenn das Teil in seiner zweiten Betriebsstellung ist.

10. Elektrischer Rasenmäher mit einem Griff (H) zum Manövrieren des Rasenmähers und einem elektrischen Schaltmechanismus nach Anspruch 9, wobei der elektrische Schaltmechanismus an dem Griff sitzt, und die Anordnung derart ist, dass der Handhebel (3) zu einer Stellung längs des Griffs zur Schalterbetätigung bewegbar ist.

## Revendications

1. Mécanisme de commande comprenant un premier élément mobile (6) ayant une première et une deuxième positions de fonctionnement, un actionneur (3a) pour déplacer le premier élément mobile (6) de sa première position de fonctionnement à sa deuxième position de fonctionnement, **caractérisé en ce que** le mécanisme de commande comprend un deuxième élément mobile (7) ayant une première position de fonctionnement dans laquelle le premier élément mobile (6) ne peut pas se déplacer de sa première position de fonctionnement à sa deuxième position de fonctionnement, et une deuxième position de fonctionnement dans laquelle le premier élément mobile (6) peut se déplacer de sa première position de fonctionnement à sa deuxième position de fonctionnement, et un moyen de course morte (9) pour absorber le mouvement de l'actionneur (3a) lorsque le deuxième élément mobile (7) est dans sa première position de fonctionnement, ce qui empêche l'actionneur (3a) de déplacer le premier élément mobile (6) de sa première position de fonctionnement à sa deuxième position de fonctionnement.

2. Mécanisme de commande selon la revendication 1, dans lequel le deuxième élément mobile (7) est disposé de manière à se déplacer dans une direction transversale à celle dans laquelle le premier élément mobile (6) se déplace.

3. Mécanisme de commande selon la revendication 1 ou la revendication 2, dans lequel un ressort (9, 9') constitue le moyen de course morte.

4. Mécanisme de commande selon la revendication 3, dans lequel le ressort est un ressort à lame (9) en acier à ressort ou en polymère élastique moulé tel qu'un polymère de type acétal.

5. Mécanisme de commande selon la revendication 3, dans lequel le ressort est un ressort hélicoïdal (9') en fil à ressort.

6. Mécanisme de commande selon une quelconque des revendications 1 à 5, dans lequel le premier élément mobile (6) est pourvu d'un ressort de retour qui rappelle le dit élément vers sa première position de fonctionnement.

7. Mécanisme de commande selon la revendication 6, lorsqu'elle dépend de la revendication 4 ou de la revendication 5, dans lequel le ressort de course morte a une force élastique plus grande que celle du ressort de retour.

8. Mécanisme de commande selon une quelconque des revendications 1 à 7, dans lequel le deuxième élément mobile (7) est pourvu d'un ressort de retour qui rappelle le dit élément vers sa première position de fonctionnement.

9. Mécanisme de commutateur électrique comprenant une paire de contacts et un mécanisme de commande selon une quelconque des revendications 1 à 8, dans lequel le premier élément mobile (6) est associé à un levier manuel et le deuxième élément mobile (7) comprend un verrouillage de sécurité, et dans lequel les contacts sont ouverts lorsque le premier élément mobile (6) est dans sa première position de fonctionnement, et ils sont fermés lorsque le dit élément est dans sa deuxième position de fonctionnement.

10. Tondeuse à gazon électrique comprenant un guidon (H) pour la manoeuvre de la tondeuse, et un mécanisme de commutateur électrique selon la revendication 9, le mécanisme de commutateur électrique étant fixé au guidon, et l'agencement étant tel que le levier (3) est déplaçable à une position le long du guidon pour la commande du commutateur.
